# EUROPEAN PATENT APPLICATION

(11) **EP 1 813 505 A1**
(43) Date of publication of application: **01.08.2007**
(21) Application number: 05805133.5
(22) Date of filing: 21.10.2005
(51) Int. Cl.: B62D 5/04

(54) **ELECTRIC POWER STEERING DEVICE**

(30) Priority: 22.10.2004 JP 2004308569
(71) Applicant: NSK Ltd., Tokyo 141-8560 (JP)
(72) Inventor: SEGAWA, Toru c/o NSK Steering Systems Co.,LTD, Gunma 371-8528 (JP); EDA, Hiroshi c/o NSK Steering Systems Co.,LTD, Gunma 371-8528 (JP)
(74) Representative: Grünecker, Kinkeldey, Stockmair & Schwanhäusser Anwaltssozietät
(86) International application number: PCT/JP2005/019412
(87) International publication number: WO 2006/043669

(57) **Abstract**

Male splines 21 and 23 formed in both the end parts of a torsion bar 5 are fitted and fixed to female splines 22 and 24 formed in an input shaft 2 and an output shaft 3. Further, the number of irregularities of protruding and recessed shaped stoppers 18 and 19 is the same as the number of irregularities of the male splines 21 and 23 formed on the torsion bar 5. The male splines 21 and 23 of both the end parts of the torsion bar 5 have the same phase. Accordingly, even when the torsion bar 5 and both the shafts 2 and 3 are attached to any phase, an angle regulated by the stoppers 18 and 19 when both the shafts 2 and 3 are distorted is substantially the same angle in right and left with respect to a neutral position.

## Description

### Technical Field

The present invention relates to an electric power steering device in which a connecting structure of an input shaft, a torsion bar and an output shaft is improved.

### Background Art

In a steering system of a vehicle, what is called a power steering device in which a steering assist is carried out by using an external power source has been widely used. Usually, as the power source for the power steering device, a vane type hydraulic pump is employed and the hydraulic pump is ordinarily driven by an engine. However, since such a power steering device has a large driving loss of the engine owing to the hydraulic pump that is constantly driven (about several horsepower to ten horsepower in a maximum load), the power steering device is hardly used for a light car of which engine size is small. Even in a vehicle having a relatively large sized engine, a fuel consumption at traveling cannot be avoided from being deteriorated so as not to be negligible.

Thus, as means for solving these problems, an electric power steering device (Electric Power Steering, refer it to as an EPS, hereinafter) that uses an electric motor as a power source recently attracts attention. The EPS has the following features. Since the EPS uses a battery mounted on a vehicle as a power source of the electric motor, the direct driving loss of an engine is not generated. Since the electric motor is actuated only during an assist of steering, not only the deterioration of the fuel consumption at traveling can be suppressed, but also an electronic control can be extremely easily carried out.

In the EPS, a steering assist torque is generated from the electric motor correspondingly to a steering torque applied to a steering wheel to reduce speed by a power transmission mechanism (a speed reducer) and transmit the speed to an output shaft of a steering mechanism.

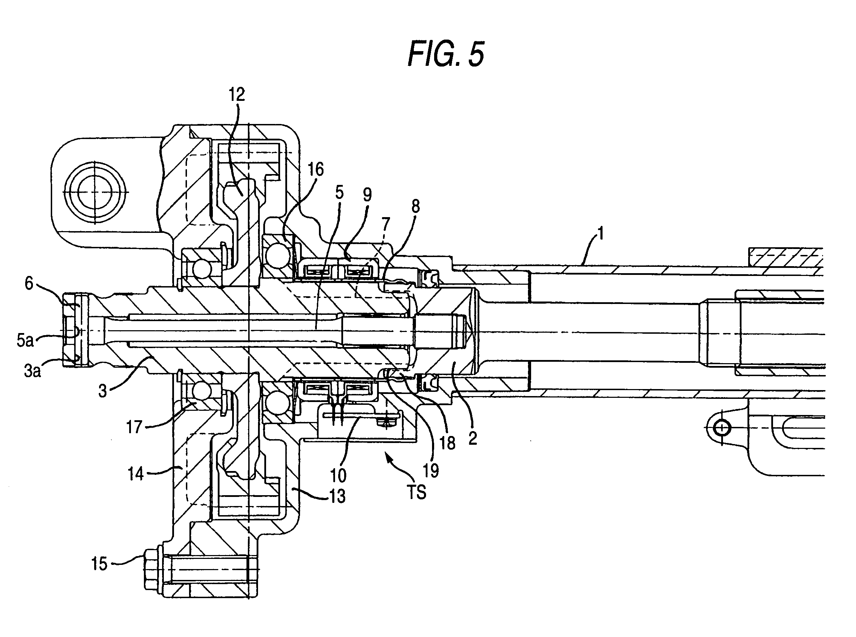

Fig. 5 is a longitudinally sectional view of a column assist type electric power steering device according to a known example.

In the column assist type electric power steering device, to a front side of a vehicle of a steering shaft 2 (an input shaft) that is attached in a steering column 1 so as to freely rotate, an output shaft 3 is connected.

To the front side of the vehicle of the output shaft 3, a rack and pinion type steering device (an illustration is omitted) is connected through a universal joint (an illustration is omitted).

To the front side of the vehicle of the steering shaft 2 (the input shaft), a base end of a torsion bar 5 is pressed and fixed. The torsion bar 5 is extended in the output shaft 3 formed in a hollow shape, and an end thereof is fixed to through holes 3a and 5a of the end parts of the output shaft 3 and the torsion bar 5 by fixing pins 6.

In the rear side of the vehicle of the output shaft 3, a torque sensor part TS is provided. That is, in the rear side of the vehicle of the output shaft 3, grooves 7 for detecting the torque sensor part TS are formed and a sleeve 8 of the torque sensor part TS is arranged outward in the radial direction of the grooves 7. The sleeve 8 has an end part of the rear side of the vehicle fixed to an end part of the front side of the vehicle of the steering shaft 2 (the input shaft) by caulking. In the sleeve 8, a window is opened. When torsion is generated between the input shaft 2 and the output shaft 3 due to a steering torque, the positions of the window of the sleeve 8 and the detecting grooves 7 of the output shaft 3 change. In accordance with the change of the positions, an impedance is detected by a yoke 9 provided in the outer periphery of the sleeve 8 to generate voltage corresponding thereto by a sensor circuit 10.

To the output shaft 3, a worm wheel 12 is attached that engages with a worm (an illustration is omitted) of a worm speed reducing mechanism connected to a driving shaft of an electric motor (an illustration is omitted).

The worm (the illustration is omitted) and the worm wheel 12 are accommodated in a rear side housing 13 and a front side housing 14 (a cover). That is, the rear side housing 13 and the front side housing 14 (the cover) are connected together by a bolt 15.

The output shaft 3 is supported by a bearing 16 of the rear side of the vehicle of the worm wheel 12 and a bearing 17 of the front side of the vehicle of the worm wheel 12 so as to freely rotate.

Further, the input shaft 2 and the output shaft 3 are respectively provided with protruding and recessed shaped stoppers 18 and 19 for regulating both the shafts 2 and 3 to a predetermined torsion angle or smaller. The stoppers 18 and 19 are configured to abut on each other when the stoppers 18 and 19 are relatively distorted by a predetermined angle, and the number of irregularities is for instance eight, respectively.

Accordingly, a steering force generated by steering a steering wheel (an illustration is omitted) by a driver is transmitted to a steering rudder wheels that are not shown in the drawing through the steering shaft 2 (the input shaft), the torsion bar 5, the output shaft 3 and the rack and pinion type steering device.

The rotating force of the electricmotor (the illustration is omitted) is transmitted to the output shaft 3 through the worm thereof (the illustration is omitted) and the worm wheel 12. The rotating force and the rotating direction of the electric motor (the illustration is omitted) are properly controlled so that a proper steering assist torque can be applied to the output shaft 3.

Usually, in a torque detecting unit of the electric power steering device, the input shaft 2 is connected to the output shaft 3 by the torsion bar 5 as described above to detect a relative torsion angle generated due to a torsion torque by steering.

The torsion bar 5 has the end part of the input shaft side pressed into and fixed to the input shaft 2 and the end part of the output shaft side pinned and fixed to the output shaft 3 by the fixing pins 6.

Further, the phases of the input shaft 2 and the output shaft 3 are determined by adjusting the input shaft 2 and the output shaft 3 to an electric neutral state when the electric power steering device is assembled in a sub-assembled state. Under the electric neutral state, the through holes 3a and 5a are drilled in the end parts of the output shaft 3, and the torsion bar 5 and the fixing pins 6 are inserted into the through holes 3a and 5a so that the output shaft 3 is fixed to the torsion bar 5.

In a final column assembled state, an electric neutral position is finely adjusted and gain adjustment is done.
Patent Document 1: Japanese Patent Unexamined Publication JP-A-11-310142

### Disclosure of the Invention

### Problems that the Invention is to solve

However, after the electric power steering device is assembled in a sub-assembled state, and the input shaft 2 and the output shaft 3 are adjusted to the electric neutral state, the phases of the input shaft 2 and the output shaft 3 are determined. Further, after that, while the phases of both the shafts 2 and 3 under the neutral state are maintained, the through holes 3a and 5a need to be drilled. Accordingly, the working operation is complicated and a production cost is required.

Further, a problem arises that under the final column assembled state after the sub-assembly state, the electric neutral position needs to be adjusted again, so that the number of processes is increased.

The present invention is achieved by considering the above-described circumstances, and it is an object of the present invention to provide an electric power steering device in which under a sub-assembled state, the electric neutral state of an input shaft and an output shaft does not need to be adjusted, and, under a final column assembled state, the electric neutral position may be merely finely adjusted, so that the number of processes can be reduced and a production cost can be reduced. Means for Solving the Problems

To achieve the above-described object, according to a first aspect of the invention, there is provided an electric power steering device comprising:
an input shaft connected to a steering wheel;
an output shaft connected to a steering mechanism;
a torsion bar that connects the input shaft to the output shaft;
a detecting part that detects at least one of a torsion torque and a rotating angle generated in the torsion bar in accordance with a steering force of the steering wheel;
an electric motor that generates a steering assist torque on the basis of a result detected from the detecting part; and
a speed reducing mechanism that reduces a speed of the steering assist torque generated in the electric motor and transmits the steering assist torque to the output shaft, wherein
first positioning parts are provided on both end parts of the torsion bar, respectively,
second positioning parts, which are connected to the first positioning part and position the input shaft and the output shaft relative to the torsion bar, are provided on the input shaft and the output shaft, respectively, and
at least one of a backlash preventing unit and an axial slip out preventing unit is provided in a connecting part which connects the second positioning part formed at least one of the input shat and the output shat to the first positioning part formed on the both end of the torsion bar.

According to a second aspect of the invention, as set forth in the first aspect of the invention, it is preferable that
the first positioning part is a male spline and
the second positioning part is a female spline having the same form as that of the male spline so as to fit to the male spline.

According to a third aspect of the invention, as set forth in the second aspect of the invention, it is preferable that
the respective input shaft and output shaft has protruding and recessed shaped stoppers formed for regulating both the shafts to a predetermined torsion angle or smaller,
the number of irregularities of the protruding and recessed shaped stoppers is the same as the number of irregularities of the male spline formed in the torsion bar,
the phases of the female splines of the input shaft and the output shaft are determined so that a regulated angle, in which both the shafts are regulated within the regulated angle by the stoppers at the time of distorting both of the shafts, is set to substantially the same angle in right and left with respect to a neutral position of both the shafts, and
the male splines of both the end parts of the torsion bar have the same phase.

### Advantage of the Invention

According to the present invention, since the male splines formed in both the end parts of the torsion bar are fitted and fixed to the female splines formed in the input shaft and the output shaft, the through holes do not need to be drilled and fixed by the pins, so that the number of processes can be decreased.

Further, according to the present invention, the number of the irregularities of the protruding and recessed shaped stoppers is the same as the number of the irregularities of the male splines formed on the torsion bar. The male splines of both the end parts of the torsion bar have the same phase. Accordingly, even when the torsion bar and both the shafts are attached to any phase, an angle regulated by the stoppers when both the shafts are distorted is substantially the same angle in right and left with respect to a neutral position.

Therefore, under a sub-assembled state, the electric neutral state of the input shaft and the output shaft does not need to be adjusted. Thus, under a final column assembled state, the electric neutral position may be merely finely adjusted, so that the number of processes can be reduced and a production cost can be reduced.

### Brief Description of the drawings

Fig. 1 is a longitudinally sectional view of a column assist type electric power steering device according to a first embodiment of the present invention;
Fig. 2A is a sectional view taken along a line A-A of Fig. 1;
Fig. 2B is a sectional view taken along a line B-B of Fig. 1;
Fig. 2C is a sectional view taken along a line C-C of Fig. 1;
Fig. 3A is a perspective view of a torsion bar according to the first embodiment of the present invention;
Fig. 3B is a sectional view showing a connected state of an output shaft and a torsion bar in a modified example of the present invention;
Fig. 4 is a longitudinally sectional view of a column assist type electric power steering device according to a second embodiment of the present invention; and
Fig. 5 is a longitudinally sectional view of a column assist type electric power steering device according to a usual example.

### Description of Reference Numerals Signs

- 1: steering column
- 2: steering shaft (input shaft)
- 3: output shaft
- 3a: throgh hole
- 5: torsion bar
- 5a: through hole
- 6: fixing pin
- 7: detecting groove
- 8: sleeve
- 9: yoke
- 10: sensor circuit
- TS: torque sensor part
- 12: worm wheel
- 13: rear side housing
- 14: front side housing (cover)
- 15: bolt
- 16, 17: bearing
- 18, 19: stopper
- 21: male spline
- 22: female spline
- 23: male spline
- 24: female spline
- 25: hole
- 26: ball
- 30: bearing
- 31: stop ring
- 32: C ring

### Best Mode for Carrying Out the Invention

Now, by referring to the drawings, an electric power steering device according to an embodiment of the present invention will be described below.

### (First Embodiment)

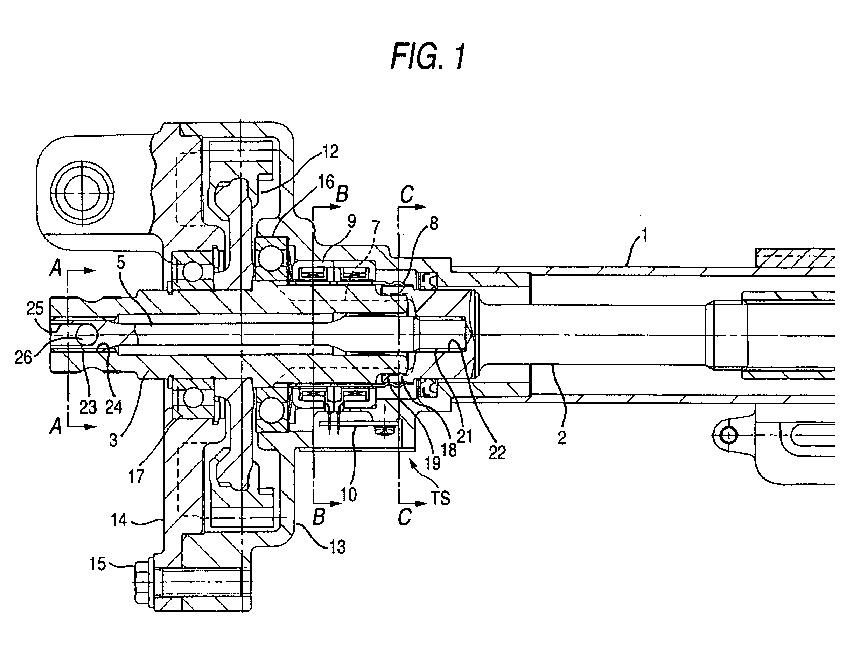

Fig. 1 is a longitudinally sectional view of a column assist type electric power steering device according to a first embodiment of the present invention.

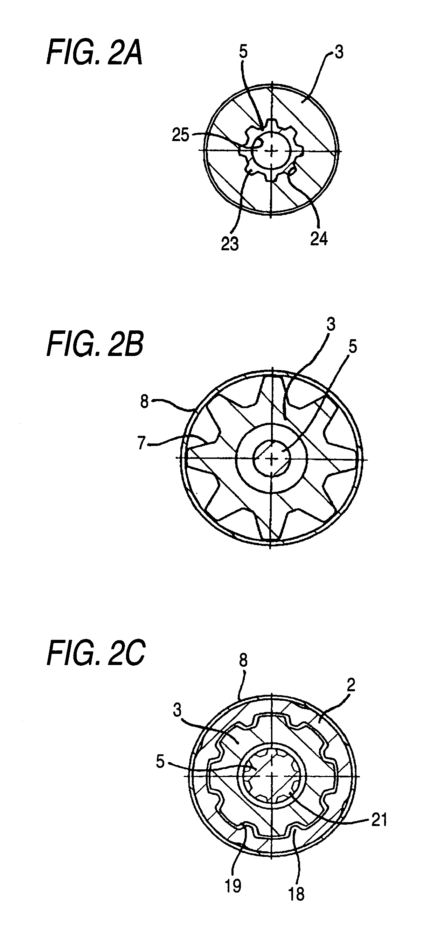

Fig. 2A is a sectional view taken along a line A-A of Fig. 1. Fig. 2B is a sectional view taken along a line B-B of Fig. 1. Fig. 2C is a sectional view taken along a line C-C of Fig. 1.

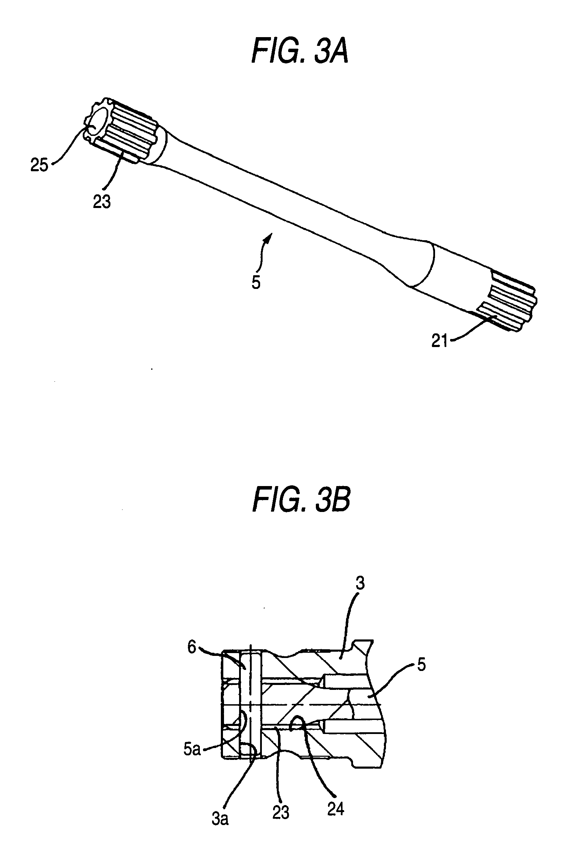

Fig. 3A is a perspective view of a torsion bar. Fig. 3B shows a modified example of the present invention and is a sectional view showing a connected state of an output shaft and the torsion bar.

In the column assist type electric power steering device, to a front side of a vehicle of a steering shaft 2 (an input shaft) that is attached in a steering column 1 so as to freely rotate, an output shaft 3 is connected.

To the front side of the vehicle of the output shaft 3, a rack and pinion type steering device (an illustration is omitted) is connected through a universal joint (an illustration is omitted).

To the front side of the vehicle of the steering shaft 2 (the input shaft), a base end of a torsion bar 5 is pressed and fixed. The torsion bar 5 is extended in the output shaft 3 formed in a hollow shape. Further, an end of the torsion bar 5 is fixed to through holes 3a and 5a of the end parts of the output shaft 3 and the torsion bar 5 by fixing pins 6.

In the rear side of the vehicle of the output shaft 3, a torque sensor part TS is provided. That is, in the rear side of the vehicle of the output shaft 3, grooves 7 for detecting the torque sensor part TS are formed. A sleeve 8 of the torque sensor part TS is arranged outward in the radial direction of the grooves 7. The sleeve 8 has an end part of the rear side of the vehicle fixed to an end part of the front side of the vehicle of the steering shaft 2 (the input shaft) by caulking. In the sleeve 8, a window is opened. When torsion is generated between the input shaft 2 and the output shaft 3 due to a steering torque, the positions of the window of the sleeve 8 and the detecting grooves 7 of the output shaft 3 change. In accordance with the change of the positions, an impedance is detected by a yoke 9 provided in the outer periphery of the sleeve 8 to generate voltage corresponding thereto by a sensor circuit 10.

To the output shaft 3, a worm wheel 12 that engages with a worm (an illustration is omitted) of a worm speed reducing mechanism connected to a driving shaft of an electric motor (an illustration is omitted) is attached.

The worm (the illustration is omitted) and the worm wheel 12 are accommodated in a rear side housing 13 and a front side housing 14 (a cover). That is, the rear side housing 13 and the front side housing 14 (the cover) are connected together by a bolt 15.

The output shaft 3 is supported by a bearing 16 of the rear side of the vehicle of the worm wheel 12 and a bearing 17 of the front side of the vehicle of the worm wheel 12 so as to freely rotate.

Further, the input shaft 2 and the output shaft 3 are respectively provided with protruding and recessed shaped stoppers 18 and 19 for regulating both the shafts 2 and 3 to a predetermined torsion angle or smaller. The stoppers 18 and 19 are designed to abut on each other when the stoppers 18 and 19 are relatively distorted by a predetermined angle, and the number of irregularities is for instance eight for each of the stoppers.

Accordingly, a steering force generated by steering a steering wheel (an illustration is omitted) by a driver is transmitted to rolling and steering wheels that are not shown in the drawing through the steering shaft 2 (the input shaft), the torsion bar 5, the output shaft 3 and the rack and pinion type steering device.

The rotating force of the electricmotor (the illustration is omitted) is transmitted to the output shaft 3 through the worm thereof (the illustration is omitted) and the worm wheel 12. The rotating force and the rotating direction of the electric motor (the illustration is omitted) are properly controlled so that a proper steering assist torque canbe applied to the output shaft 3.

In this embodiment, male splines 21 and 23 are formed in both the end parts of the torsion bar 5. Further, in the input shaft 2 and the output shaft 3 respectively, female splines 22 and 24 are formed that are respectively fitted to the male splines 21 and 23 and have the same shapes as those of the male splines 21 and 23.

The male splines 21 and 23 of the torsion bar 5 have the same phase and the number of irregularities of them is the same, for instance, eight.

The number of the irregularities of the protruding and recessed shaped stoppers 18 and 19 is the same as the number of the irregularities of the male splines 21 and 23 formed on the torsion bar 5, for instance, eight.

The phases of the female splines 22 and 24 of the input shaft 2 and the output shaft 3 are predetermined so that an angle to which both the shafts are regulated by the stoppers 18 and 19 when both the shafts 2 and 3 are distorted is set to substantially the same angle in right and left with respect to a neutral position.

Namely, the phases of the input shaft 2 and the output shaft 3 are set in such a way that one of the phases has the same phase as that of the stopper and the other has an angle shifted by a half angle. Thus, the angle regulated by the stoppers 18 and 19 with respect to the neutral position is substantially the same by steering rightward and leftward.

Further, in the end part of the torsion bar 5, a hole 25 is formed. Into this hole 25, a ball 26 made of steel is pressed into as described below.

As described above, the output 3 is fitted to the torsion bar 5 with a gap in a spline fitting part (23, 24) at the end thereof. After the output shaft is fitted to the torsion bar, the ball 26 is driven (pressed) into the hole 25 provided in the end face of the torsion bar 5, so that the end part of the torsion bar 5 is enlarged to prevent the backlash of the splines.

As shown in Fig. 3B as a modified example, the fixing pin 6 may be inserted into the through holes 3a and 5a of the end parts of the output shaft 3 and the torsion bar 5 to secure the output shaft 3 to the torsion bar 5. Otherwise, the fixing pin may be pressed into the through holes to fix the output shaft to the torsion bar.

With the above-described construction, according to this embodiment, the male splines 21 and 23 formed in both the end parts of the torsion bar are fitted and fixed to the female splines 22 and 24 formed in the input shaft 2 and the output shaft 3. Further, the number of the irregularities of the protruding and recessed shaped stoppers 18and 19 is the same as the number of the irregularities of the male splines 21 and 23 formed on the torsion bar 5. The male splines 21 and 23 of both the end parts of the torsion bar 5 have the same phase. Accordingly, even when the torsion bar 5 and both the shafts 2 and 3 are attached to any phase, an angle regulated by the stoppers 18 and 19 when both the shafts 2 and 3 are distorted is substantially the same angle in right and left with respect to a neutral position. Therefore, under the sub-assembled state, the electric neutral state of the input shaft 2 and the output shaft 3 does not need to be adjusted. Thus, under a final column assembled state, the electric neutral position may be merely finely adjusted, so that the number of processes can be reduced and a production cost can be reduced.

### (Second Embodiment)

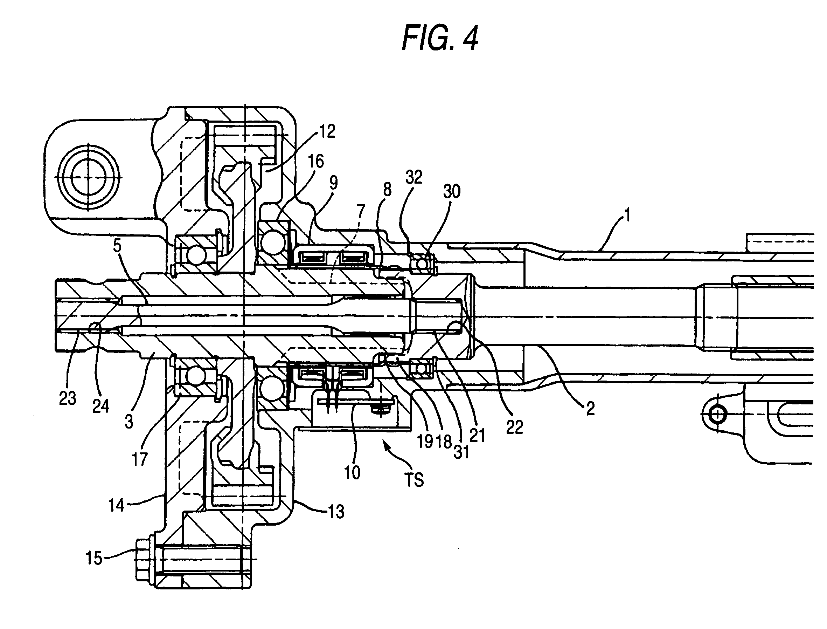

Fig. 4 is a longitudinally sectional view of a column assist type electric power steering device according to a second embodiment.

In this embodiment, its basic structure is the same as that of the first embodiment, and accordingly, different points will be described.

In this embodiment, an input shaft 2 is formed so that an axial movement is regulated relative to a rear side housing 13 by a bearing 30 (having a seal). Accordingly, a torsion bar 5 may suppress only a backlash in a rotating direction and does not need to be fixed by a fixing pin 6. Thus, the number of parts and processes can be reduced. A reference numeral 31 designates a stop ring and a reference numeral 32 designates a C ring.

As described above, whenboth the shafts 2 and 3 are worked, grooves (female splines 22 and 24) are respectively formed by a cold forging working, so that the number of processes can be reduced, the phase error of the grooves can be decreased and a production cost can be reduced.

Other structures, operations and effects are the same as those of the above-described first embodiment.

The present invention is not limited to the above-described embodiment and may be modified in various ways.

In the above-described embodiment, the structure is shown that the male splines 21 and 23 are fitted to the female splined 22 and 24 so that the torsion bar 5, the input shaft 2 and the output shaft 3 are mutually positioned, however, the positioning unit of the present invention is not limited to the above-described spline fit. For instance, in the above-described embodiment, the straight spline grooves parallel to the axial direction are provided, however, oblique grooves relative to the axial direction or curved grooves may be provided. In the above-described embodiment, the grooves having an equal width are provided along the axial direction, however, the width of a groove in an end part of an axis may be different from the width of a groove in an intermediate side of an axis. Further, a polygonal form or a serration may be used as a positioning unit in place of the positioning unit by the spline fit.

In the above-described embodiment, an example is described in which the positioning parts of the same form are provided at both the ends of the torsion bar, however, positioning parts of different forms may be provided at both ends.

The present invention is described in detail by referring to the specific embodiments, however, it is to be understood to a person with ordinary skill in the art that the present invention may be changed or corrected in various ways without departing from the spirit and scope of the present invention.

This application of the present invention is based on Japanese Patent Application (JP application No. 2004-308569) filed on October 21, 2004 and contents thereof are incorporated herein as a reference.

## Claims

1. An electric power steering device comprising:
an input shaft connected to a steering wheel;
an output shaft connected to a steering mechanism;
a torsion bar that connects the input shaft to the output shaft;
a detecting part that detects at least one of a torsion torque and a rotating angle generated in the torsion bar in accordance with a steering force of the steering wheel;
an electric motor that generates a steering assist torque on the basis of a result detected from the detecting part; and
a speed reducing mechanism that reduces a speed of the steering assist torque generated in the electric motor and transmits the steering assist torque to the output shaft, wherein
first positioning parts are provided on both end parts of the torsion bar, respectively,
secondpositioning parts, which are connected to the first positioning part and position the input shaft and the output shaft relative to the torsion bar, are provided on the input shaft and the output shaft, respectively, and
at least one of a backlash preventing unit and an axial slip out preventing unit is provided in a connecting part which connects the second positioning part formed at least one of the input shat and the output shat to the first positioning part formed on the both end of the torsion bar.

2. The electric power steering device according to claim 1, wherein
the first positioning part is a male spline and
the second positioning part is a female spline having the same form as that of the male spline so as to fit to the male spline.

3. The electric power steering device according to claim 2, wherein
the respective input shaft and output shaft has protruding and recessed shaped stoppers formed for regulating both the shafts to a predetermined torsion angle or smaller,
the number of irregularities of the protruding and recessed shaped stoppers is the same as the number of irregularities of the male spline formed in the torsion bar,
the phases of the female splines of the input shaft and the output shaft are determined so that a regulated angle, in which both the shafts are regulated within the regulated angle by the stoppers at the time of distorting both of the shafts, is set to substantially the same angle in right and left with respect to a neutral position of both the shafts, and
the male splines of both the end parts of the torsion bar have the same phase.
